# EUROPEAN PATENT APPLICATION

(11) **EP 0 977 129 A1**
(43) Date of publication of application: **02.02.2000**
(21) Application number: 98650047.8
(22) Date of filing: 30.07.1998
(51) Int. Cl.: G06F 17/30, G06F 3/033, G09G 5/14

(54) **Development of multi-media systems**

(71) Applicant: Infopoint Systems Research & Development Ltd., Galway (IE)
(72) Inventor: Wischer, Alexander, Corcullen, Galway (IE); Durity, Trevor, Salthill, Galway (IE); Larkin, Edmund, Kilcolgan, County Galway (IE)
(74) Representative: Weldon, Michael James

(57) **Abstract**

A multi-media system is developed by an automatic process (10) which takes passive background (40) and foreground (45) images and automatically generates bitmaps (46-49) representing individually addressable images and icons for navigation from one screen to another. The process is carried out in a structured manner in which certain conditions are pre-set. Modifications are easily implemented by changing the pre-set parameters and repeating the process. A structured authoring file is generated which uses pre-set searching structures to retrieve bitmaps for the target application. Additional navigation commands may be easily added at the final stage.

## Description

The invention relates to the development of multi-media systems, and more particularly multi-media systems which are for real time operation providing dynamic access for users to databases. Such a development method comprises the steps of defining multi-media resources, and defining a target application process for retrieving and outputting information using the multi-media resources.

The basic steps for development of a multi-media system include definition of the system requirements, development of a prototype, specification of the full system, and building the system. Because the work involved in gathering requirements information and prototype feedback information is time-consuming and complex, it is important that the prototype development and system build steps be performed in a structured manner to allow easy modification. It is also important that these steps be performed efficiently to minimise the development cycle time.

PCT Patent Specification No. WO 97/46957 (Tallpine Technologies) describes generation of a multi-media presentation. The steps include definition of resource objects, and "widget" objects which control output of the objects. While this approach appears to be satisfactory in many situations, where the multi-media system relies heavily on static presentation of information and images and comprehensive access to databases, the processing involved with this prior approach would appear to provide an excessive overhead on the hardware system. Also, the development cycle can become complex and excessively time-consuming.

It is therefore an object of the invention to provide a method for developing a multi-media system in which bitmaps are generated efficiently and in a structured manner to allow simple modification after development. Another object is to allow simple integration of other multi-media resources with bitmaps. A still further object is to allow efficient development of bitmap navigation structures for the multi-media system.

According to the invention, there is provided a method of developing a multi-media system, the method comprising the steps of:-
defining multi-media resources;
generating a target application control process for retrieving and outputting information using the multi-media resources, and
loading the control process in target hardware, characterised in that,
the step of defining multi-media resources comprises:-
   building display screen background and foreground images, with corresponding pixels in a one-to-one relationship
   automatically comparing corresponding background and foreground pixels,
   automatically drawing a boundary enclosing difference pixels of the foreground display screen image and generating a difference bitmap of pixels within the boundary,
   automatically saving in non-volatile memory the difference bitmap, and the remaining foreground bitmap, and
   automatically generating authoring commands specifying the bitmaps as passive images or interactive icons, and indicating screen position and size; and
the control process is generated by modifying the authoring commands, by linking text, video, and audio resources to them, and by adding navigation commands according to a storage structure in the target hardware.

In one embodiment, a difference bitmap is generated only if a condition specifying a minimum separation from a nearest difference bitmap is satisfied.

Preferably, the difference bitmap has a regular polygonal shape, such as a rectangle.

In another embodiment, the difference bitmap is generated only if a condition specifying a minimum difference pixel density is satisfied.

Preferably, the comparing step comprises the sub-steps of scanning through a pixel row, identifying an initial difference pixel, and subsequently scanning in two dimensions around the difference pixel to locate any adjoining difference pixels.

In another embodiment, each identified identified pixel is used as a source for further searching.

In one embodiment, the method comprises the further step of recording locations of processed pixels to avoid processing repetition.

Preferably, the method comprises the further steps of setting colours of the cut-out bitmaps as Chroma key colours to be visible in front of the background image.

In one embodiment, image sequence bitmaps for depressing movement of icon buttons are stored initially, and the storage locations are incorporated in the authoring file.

The invention will be more clearly understood from the following description of some embodiments thereof, given by way of example only with reference to the accompanying drawings in which:-
Figs. 1 and 2 are diagrams illustrating multi-media navigation in a system developed by a method of the invention;
Fig. 3 is a flow diagram illustrating the method; and
Figs. 4 and 5 are diagrams of images which are processed by the method.

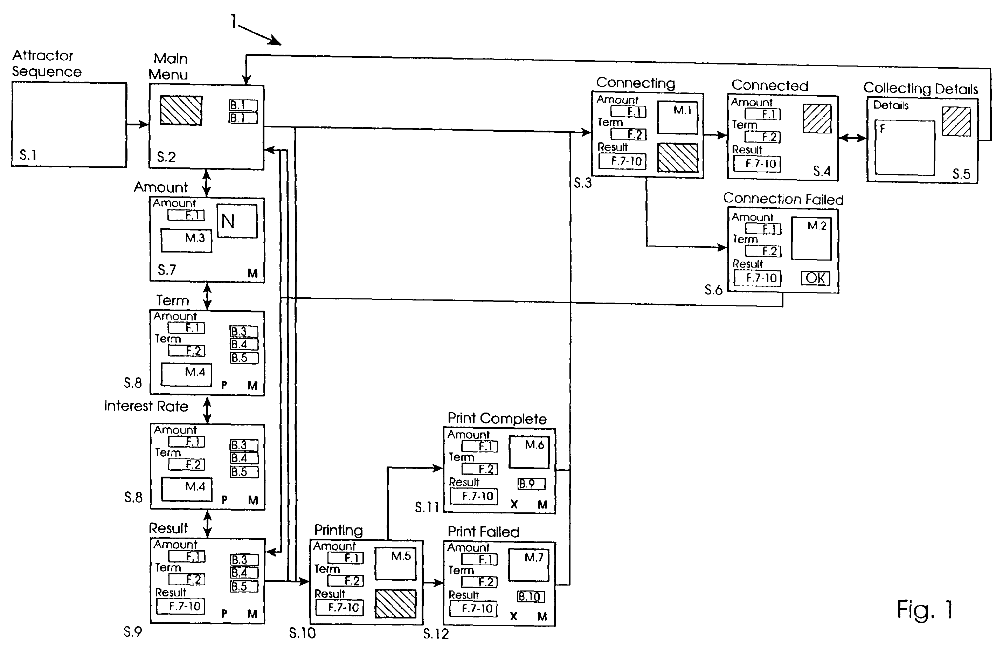

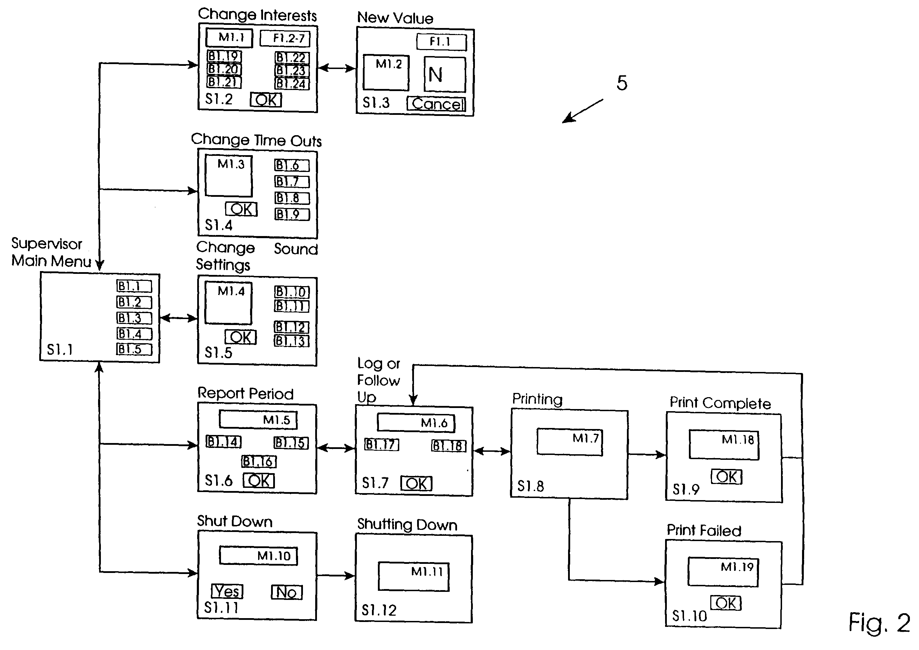

Referring initially to Figs. 1 and 2, the structure of a multi-media system developed by a method of the invention is illustrated. These diagrams illustrate an important aspect of the system, namely prompting users to navigate through various layers to inform themselves about subjects such as products being sold. A touch-sensitive monitor is used. In a main menu screen S2 a video box displays an animation screen to attract a user, and icon buttons B1 and B2 allow initial navigation. The button B2 links with a screen S3 which displays information for a financial product, including the amount, term, and result. It also displays a video box. The screen automatically progresses to a screen S4 in which a video sequence and data are displayed to allow additional information to be inputted as indicated in a screen S5. A different screen, S6, is displayed to allow connection to a database providing information for the fields F1, F2, and F7 - F10. A screen S7 follows the screen S6 and a keypad is displayed to allow inputting of data. There are bi-directional links for the screens S8 and S9. Each of these screens provides a button icon for return to the main menu screen S2 and one for movement back to the previous screen. Buttons B6, B7, and B8 are used for inputting further instructions, including a printing command, which causes display of the screen S10 followed by screens S11 and S12 indicating printing status. The legend for the other letters is:-
P - Previous screen button,
M - Main menu button,
H - Help button,
N - Number pad.

The navigation structure 1 shown in Fig. 1 is for customer use, for example, the lobby of a financial institution. A different navigation structure 5, shown in Fig. 2, is used for supervisor access. In this case, the initial menu is S1.1, which provides a series of buttons for transfer to additional screens. In this case, there is no need for video clips and the navigation structure is much simpler. Successive screens allow changing of parameter values in a database and for interactivity. These parameters include interest rates, time-outs, sound settings, reports, logs, printing, and shutdown parameters.

It will be appreciated from these drawings that the multi-media system which is developed by a method of the invention must be capable of coping with a number of navigation structures, each of which may be quite complex and may involve a number of different media including video, image display, audio outputs, and icon-based navigation options.

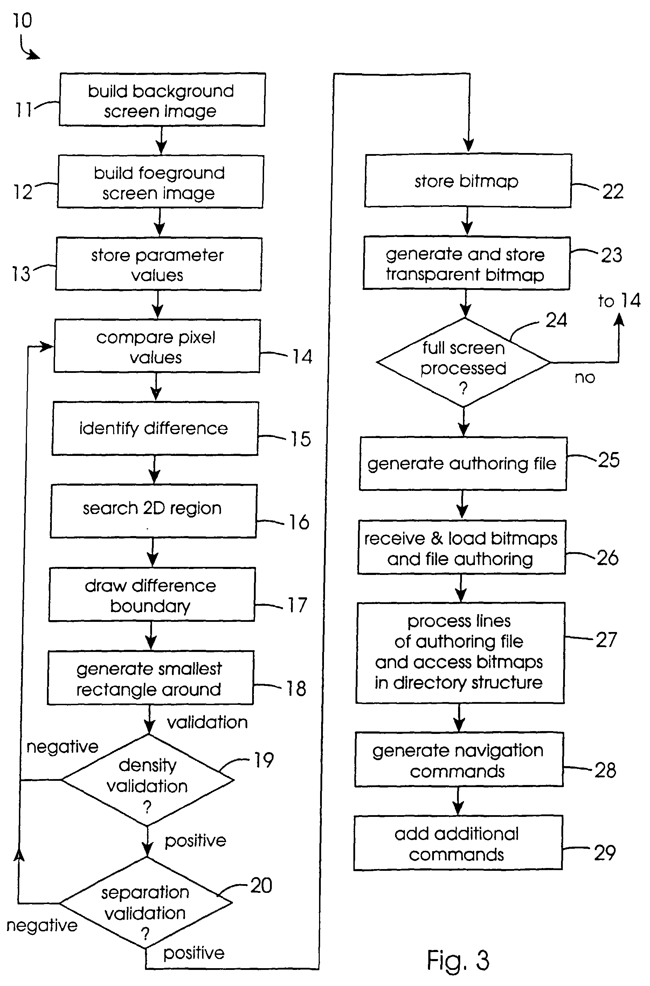

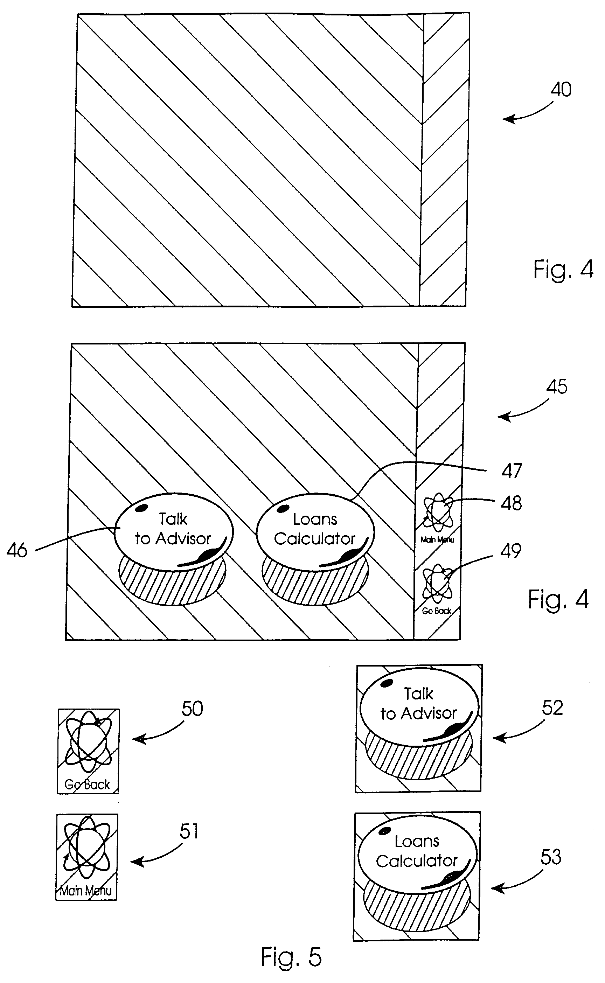

Referring now to the remaining drawings, the development method is now described. The method is indicated generally by the numeral 10 in Fig. 3 and it comprises steps 11 to 29 inclusive. In step 11 a background screen image such as an image 40 shown in Fig. 4 is built. Typically, such a background image incorporates the logo of the company operating the system and some aesthetically attractive illustrations. Image editing tools are used to generate this image. In step 12 a foreground screen image is developed, again using image editing tools. This image includes icon buttons for navigation to different screens. It also includes fields for display of retrieved data. An example is a foreground screen 45 shown in Fig. 4. This screen includes a "TALK TO ADVISOR" button 46, a "LOANS CALCULATOR" button 47, a "MAIN MENU" button 48, and a "GO BACK" button 49. These are integral images only and there is no interactivity at this stage.

In step 13 an automatic bitmap process is activated by storing parameter values. The purpose of the process is to separate out certain bitmaps in the foreground image so that they are individually addressable. This is important, for example, if they are to be used as icons as is the case with the four icon buttons 46 to 49 inclusive. The parameter values include switch values and commands. The switch values include the following:-
A +m/-m flag to indicate whether or not a user message should be displayed when the process is completed. The default value is positive.
A +t/-t flag. This sets the option of whether or not to save transparent bitmaps. These are the bitmaps of the foreground image having the Chroma key colour values and which are therefore transparent.
A +d/-d flag. This flag indicates whether or not the difference bitmaps should be saved. In almost all cases they are saved.

The other parameters which are stored in step 13 are commands which are accepted in a text file. These commands include the following:-
A retrieval path of the input foreground and background images.
The destination location of the images and bitmaps.
The threshold "density" of a bounded difference bitmap. This parameter is calculated as the number of differing pixels in an area as a proportion of the total number of pixels in the area.
A "distance" parameter which specifies the distance in pixels between rectangles bounding a difference bitmap. The default value is 10 pixels. Use of this parameter is described in more detail below.
Chroma key colour values for transparent bitmaps. This specifies the colours of the foreground image which are transparent.
Locations for bitmaps for undepressed and depressed button images.
Locations for image sequence bitmaps for the depressing movement of a button. There are typically five to seven frames per animated button. The frame sequences may be duplicated across buttons.

There are other parameters to indicate low-level details such as the file names for the generated difference bitmaps.

When the parameter values have been stored, the image processor accesses the input images. In one embodiment, the background and foreground screen images are "full screen" bitmaps for which the resolution can be up to 1024 x 768. Bitmaps have the same dimensions with directly corresponding pixels in a one-to-one relationship. These images are all still graphics.

In step 14 the image processor automatically compares the values of corresponding pixels in the background and foreground screen images. These pixels are regarded as being different even if their values differ by only 1 bit. There in no minimum threshold at the pixel level.

In step 15 a first difference is identified as the processor scans through rows of pixels. This causes the processor to automatically search in a two-dimensional region in step 16 to identify other differences. This search is for adjoining pixels which also differ from the corresponding pixel in the background screen image so that a continuous line of pixels can be drawn. The search continues in step 17 until a full difference boundary is drawn. The manner in which the search continues is to automatically search the currently adjoining pixel in each direction until a new difference is determined and to then regard that pixel as being the new source for searching in each direction. In step 18, the image processor automatically "draws" the smallest possible rectangle around the difference boundary by recording the locations of the boundary pixels.

A rectangle defines each bitmap on an interim basis until validation operations have been performed to determine whether or not the interim difference bitmap should be accepted. A validation step 19 compares the density of the bitmap with the pre-set density threshold level, previously inputted with the other parameters. The threshold level is set according to various criteria to indicate the level of difference which is required. This allows co-ordination of the automatic process with the editing task which generates the screen images in the first instance. For example, if the threshold has a high level, it will be accepted at the editing stage that any icons should have significantly different colours. This is required for presentation purposes in any event. In step 20, validation is performed according to the distance between the rectangle and the nearest other rectangle. The separation parameter value is set to prevent individual letters of words, or indeed words themselves being the subject of difference bitmaps. It will be appreciated that these parameter values therefore allow a high degree of automation with minimum or, in many cases, no human interaction being required.

If the difference bitmap fails a validation check, the image processor returns to step 14 and continues scanning until a subsequent difference is located. Re-processing of the pixels which have already been processed is avoided by recording locations of processed pixels and avoiding repetition according to location.

If the difference bitmap passes the validation steps, it is stored in step 22 in the locations specified by the input parameter values. Difference bitmaps 50, 51, 52, and 53 for the images 49, 48, 47, and 46 respectively are shown in Fig. 5. The bitmap which is stored is referred to as a "cut out" bitmap. In step 23, the transparent cut out bitmaps are stored. These are the bitmaps within the cut-out bitmaps which have the Chroma key colours and which are therefore transparent. These are typically the pixels surrounding icons in the cut-out bitmaps. If the Chroma key colour is switched on then those pixels of the cut-out bitmaps having this colour are transparent, and the corresponding pixels in the background are visible instead. As indicated by the decision step 24, the full foreground image screen is processed until all of the difference bitmaps have been generated and stored. The remainder of the foreground image is discarded.

In step 25 an authoring file is generated. The following is an example of an authoring file:-
- BackGround: Customer Default
- Screen: S.2
- Text: M.2,80, 80, 300, 300, "Please select the section, about which you want to find out more.",,,,,,
- Button: Personal Loans,S.3, 360, 160, 160, 80,,,,,,,,,,,,,,,,,,,,,,,,,,,
- Button: Mortgages,S.11, 360, 240, 160, 80,,,,,,,,,,,,,,,,,,,,,,,,,,,,,,
- Button: Insurance,S.15, 360, 320, 160, 80,,,,,,,,,,,,,,,,,,,,,,,,,,,

Each line of the file describes an item contained in the screen. The first item in each row specifies that the bitmap is passive text, or an interactive icon or button. The next item describes the name assigned to the bitmap, and this is followed by the XY positions of the bitmap, in turn followed by the XY sizes. This file also includes the locations of image sequence bitmaps for depressing movement of icon buttons.

An important aspect of the authoring file is that it may be used in a very simple and well-structured manner by an authoring automatic process to generate a multi-media control process, either a prototype or a fully-built system. An authoring tool only needs to process the authoring file together with the bitmaps to generate the target control process. Loading of the bitmaps is indicated by the step 26 and the authoring file is processed in step 27. This processing involves importing the bitmaps to the relevant positions in the multi-media hardware system. A specific directory structure is used for this, as generated in the steps up to step 25. The directory structure is hierarchical, beginning with one directory for each pass of the process to step 25. Within this, there is a directory for each bitmap in the first screen, this directory containing the actual bitmap file generated by the automatic process. Steps 11 to 25 create a directory structure in a specific and pre-set manner with common file name techniques and nesting arrangements.

In step 28 the navigation commands required by the target control process are generated. These are the commands which link icons to destination screens. The button entries are read, followed by the filename, location, and destination from the authorising file. The authoring file instructs the processor to place the image on the corresponding page, and updates the scripts. Additional commands are added in step 29.

It will be appreciated that the invention provides an automatic process for generating an authored multi-media system in a simple and structured manner. The initial image editing is the only major manual input - the remaining steps being largely automatic. This is important as it allows both prototyping at an early stage of development, and final build operations to be carried out efficiently. For example, for prototyping the initial images may be generated quickly - possibly scanned into the development system. Because of the pre-defined structure which is used, the method may be easily modified and re-run for simple modification.

The invention is not limited to the embodiments described, but may be varied in construction and detail within the scope of the claims.

## Claims

1. A method of developing a real time multi-media system, the method comprising the steps of:-
defining multi-media resources;
generating a target application control process for retrieving and outputting information using the multi-media resources; and
loading the control process in target hardware, characterised in that,
the step of defining multi-media resources comprises:-
building (11, 12) display screen background and foreground images, with corresponding pixels in a one-to-one relationship
automatically comparing (14) corresponding background and foreground pixels,
automatically drawing (17) a boundary enclosing difference pixels of the foreground display screen image and generating a difference bitmap of pixels within the boundary,
automatically saving (22) in non-volatile memory the difference bitmap, and the remaining foreground bitmap, and
automatically generating (23) authoring commands specifying the bitmaps as passive images or interactive icons, and indicating screen position and size; and
the control process is generated (27) by modifying the authoring commands by linking text, video, and audio resources to them, and by adding navigation commands according to a storage structure in the target hardware.

2. A method as claimed in claim 1, wherein a difference bitmap is generated only if a condition (20) specifying a minimum separation from a nearest difference bitmap is satisfied.

3. A method as claimed in claim 2, wherein the difference bitmap (50 -53) has a regular polygonal shape(50 - 53), such as a rectangle.

4. A method as claimed in any preceding claim, wherein the difference bitmap is generated only if a condition specifying (19) a minimum difference pixel density is satisfied.

5. A method as claimed in any preceding claim, wherein the comparing step (14) comprises the sub-steps of scanning through a pixel row, identifying an initial difference pixel, and subsequently scanning in two dimensions around the difference pixel to locate any adjoining difference pixels.

6. A method as claimed in claim 5, wherein each identified pixel is used as a source for further searching.

7. A method as claimed in claims 5 or 6, comprising the further step of recording locations of processed pixels to avoid processing repetition.

8. A method as claimed in any preceding claim, comprising the further steps of setting colours of the cut-out bitmaps as Chroma key colours to be visible in front of the background image.

9. A method as claimed in an preceding claim, wherein image sequence bitmaps for depressing movement of icon buttons are stored initially, and the storage locations are incorporated in the authoring file.

10. A real time multi-media system whenever developed by a method as claimed in any preceding claim.
